(19) Europäisches Patentamt
European Patent Office
Office européen des brevets

(11) **EP 0 951 155 B1**

(12) **FASCICULE DE BREVET EUROPEEN**

(45) Date de publication et mention
de la délivrance du brevet:
**20.02.2008 Bulletin 2008/08**

(51) Int Cl.:
**H04L 12/24** *(2006.01)*

(21) Numéro de dépôt: **99400808.4**

(22) Date de dépôt: **02.04.1999**

(54) **Procédé et système d'administration de réseaux et de systèmes**

Verfahren und Vorrichtung zur Verwaltung von Netzwerken und Anlagen

Method and system for administering networks and systems

(84) Etats contractants désignés:
**DE ES FR GB IT**

(30) Priorité: **15.04.1998 FR 9804695**

(43) Date de publication de la demande:
**20.10.1999 Bulletin 1999/42**

(73) Titulaire: **BULL S.A.**
**78430 Louveciennes (FR)**

(72) Inventeurs:
• **Brunet, Jean**
**35830 Betton (FR)**
• **Lamberet, Florence**
**78170 La Celle Saint Cloud (FR)**

(74) Mandataire: **Pellegrini, Marie Claude et al**
**Bull SAS**
**Direction de la Propriété Intellectuelle**
**Poste Courrier : F1 0B 04**
**Rue Jean Jaurès**
**BP 68**
**78340 Les Clayes sous Bois (FR)**

(56) Documents cités:
**EP-A- 0 777 357** **US-A- 5 651 006**

• **PATENT ABSTRACTS OF JAPAN vol. 097, no. 008, 29 août 1997 (1997-08-29) & JP 09 101929 A (HITACHI LTD;HITACHI PROCESS COMPUT ENG INC), 15 avril 1997 (1997-04-15)**
• **SIEGL M R ET AL: "HIERARCHICAL NETWORK MANAGEMENT: A CONCEPT AND ITS PROTOTYPE IN SNMPV2" COMPUTER NETWORKS AND ISDN SYSTEMS, vol. 28, no. 4, 1 février 1996 (1996-02-01), pages 441-452, XP000553071**

**Description**

La présente invention concerne un procédé et un système d'administration de réseau et de systèmes.

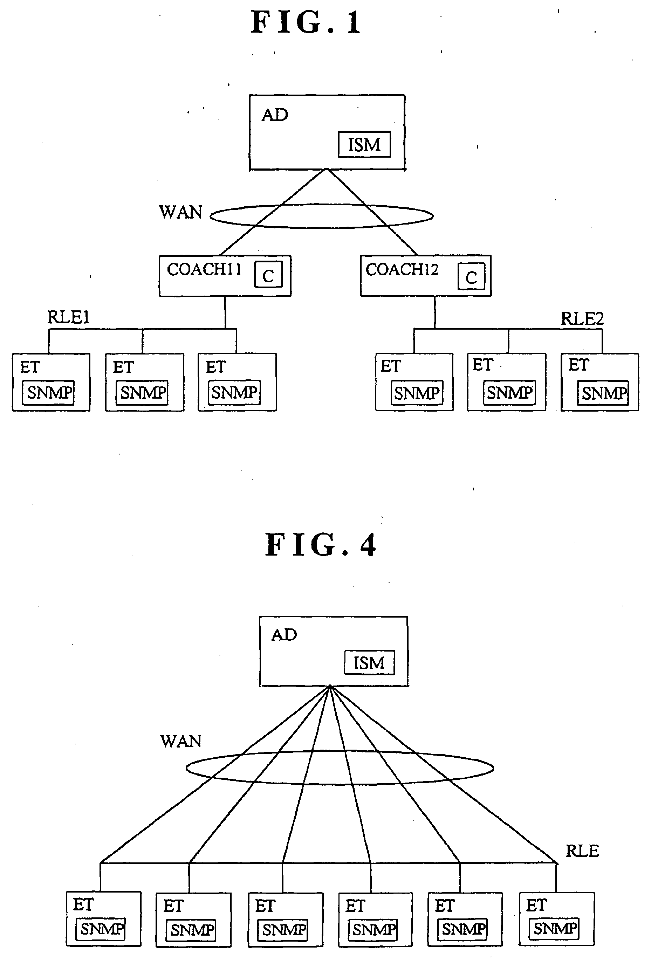

Les grandes entreprises ont un nombre croissant d'équipements à gérer. Ces équipements, reliés entre eux par un réseau de communication appelé "Réseau Local d'Entreprise" (RLE, LAN), sont administrés par un administrateur. Pour administrer (contrôler, agir, surveiller, piloter) à distance des équipements à partir d'un point, le modèle d'architecture comportant un administrateur, par exemple, (ISM, figure 4) et un agent, par exemple, type SNMP, est le plus couramment adopté. Dans ce modèle d'architecture, les agents (SNMP), implémentés sur les équipements (ET) du réseau, renseignent l'administrateur sur l'état de chacun des équipements administrés. Lors de chaque dysfonctionnement d'un équipement, un agent (snmp) envoie, à l'administrateur, une alarme à travers le réseau grande distance (WAN). Dans la grande majorité des cas, cet administrateur gère plusieurs centaines d'équipements répartis sur un ou plusieurs pays. Les informations échangées entre l'administrateur et les équipements administrés circulent à travers un réseau grande distance aussi appelé "WAN" (Wide Area Network). Cependant, le réseau WAN a des capacités limitées et la transmission des informations à travers ce réseau est aujourd'hui lente et peu sûre. Ce problème s'explique par le fait que la bande passante du réseau (WAN) est trop réduite par rapport au nombre d'informations toujours croissant devant transiter entre les administrateurs et leurs équipements. Les réseaux locaux supportent souvent un trafic supérieur à 10 Mégabits, alors que le réseau WAN a une largeur de bande souvent inférieure ou égale à 64 Kilobits ; 9600 bauds est une valeur courante. En conséquence, le réseau (WAN) est sursaturé et beaucoup d'informations sont perdues. D'autre part, la transmission des données est très lente et le type d'envoi (par petits paquets périodiques) n'est pas adapté aux modes courants d'utilisation des WANS. Le traitement des informations par l'administrateur est ralenti et les actions correctrices à déclencher sont tardives. De plus, dans certains cas, la chronologie des arrivées des informations à l'administrateur n'est pas respectée à cause de ce flux trop important. Dans ce cas, le traitement de ces informations peut donner lieu à une mauvaise interprétation des faits qui peut déclencher des actions inadéquates de la part de l'administrateur. Le coût des communications est, par ailleurs, élevé.

Une solution au problème de perte d'informations consiste en ce que l'administrateur génère à travers le réseau (WAN), à une période donnée, une requête de la forme "Est-ce que tu vas bien ?" vers chaque système administré et que ces derniers répondent "Oui, je vais bien". Cette solution est très coûteuse. Elle ne résout pas le problème de sursaturation des câbles et augmente encore les flux d'informations à travers le réseau (WAN). En outre, la requête ou la réponse à cette requête peut se perdre dans le réseau (WAN).

Une autre solution consiste à gérer les flux d'informations à l'aide d'outil tel que SM Monitor 6000 proposé par la marque IBM. Cet outil, fortement lié à la plate-forme appelée "System View", est déporté et permet de concentrer les alarmes d'un réseau et d'effectuer des opérations à partir des informations que peuvent fournir les agents du réseau. Mais, SM Monitor 6000 est consommateur d'unité centrale de traitement (CPU, Control Processing Unit) et prend une place importante en mémoire. De plus, aujourd'hui, un grand nombre d'entreprises a besoin de gérer des petits réseaux en grand nombre. Or, SM Monitor 6000 ne possède pas de mécanisme de déploiement à grande échelle et ne peut donc pas être utilisé pour la gestion d'un grand nombre d'équipements. En outre, SM Monitor 6000 a une technologie peu portable. La configuration de SM Monitor 6000 ne peut s'effectuer qu'avec la plate-forme "System View" et est inexploitable sans cet outil.

Une dernière solution, proposée par la société "BMC software", consiste en un module de contrôle qui permet de surveiller un ensemble d'agents appelés "agents Patrols". Un agent Patrol peut contenir plusieurs modules, chacun ayant pour fonction de récolter un certain type d'informations

tel que les informations du système ou les informations d'une application (par exemple, d'une base de données Oracle). Cette solution n'est pas adaptée. En effet, bien que la technologie Patrol permette de récolter certaines informations sur les équipements, elle n'est pas conçue pour assurer un rôle d'administrateur vis-à-vis d'agents. L'agent Patrol traite des données locales sur une machine, il n'est qu'une source d'informations et ne s'alimente pas de données en provenance d'autres agents. En outre, la capacité à gérer le changement sur les équipements est ignorée par l'approche de Patrol, alors qu'elle est fondamentale en exploitation. De plus, elle est consommatrice de temps et moyens CPU des systèmes cibles à cause de la technologie par langage interprété.

Les enseignements des documents US 5 651 006 et JP 09 101929 peuvent aussi être cités ici à titre d'exemples de solutions antérieures pour des réseaux interconnectés.

La présente invention a pour but de pallier des inconvénients de l'art antérieur en proposant un procédé portable d'administration de réseaux adapté à l'administration d'un grand nombre d'équipements. Le procédé selon l'invention, limite et sécurise le flux d'administration entre l'administrateur et les équipements administrés en évitant l'envoi de messages non nécessaires ou la répétition de l'envoi d'un même message dans le réseau WAN. Ce procédé s'adapte ainsi, aux saturations de la bande passante et permet de réduire les pertes d'informations dans le réseau (WAN). De plus, grâce à ce procédé, les fréquences de récolte d'informations sont adaptables, information par information, et les données récoltées par le système sont réutilisables à tout moment pour effectuer des statistiques, pour surveiller les performances des équipements ou encore pour éviter d'aller rechercher plusieurs fois la même information. D'autre part, ce système s'auto-instruit de son environnement. La prise en compte de milliers d'équipements se fait automatiquement malgré des contextes très différents. L'apparition et la disparition de systèmes élémentaires sont dynamiquement prises en compte au cours de l'exploitation, sans intervention de l'opérateur. Enfin, l'invention permet une diminution de la charge de traitements d'informations au niveau du contrôle.

Ce but est atteint par le procédé d'administration d'un réseau selon la revendication 1.

Selon une particularité de l'invention, le procédé d'administration d'un réseau est caractérisé en ce qu'à chaque nouvelle étape de découverte des équipements du sous-réseau, le module de découverte (MD) met à jour les bases de données du noyau (N) et du module de configuration des modèles (MCM) contenant la liste des équipements et de leurs domaines.

Selon une autre particularité, toutes les alarmes émises par les différents modules sont envoyées à l'administrateur principal (AD) via le module de sécurisation d'alarmes (MSA), ladite alarme étant accompagnée d'un message d'envoi destiné au serveur du module de sécurisation d'alarmes (sMSA).

Selon une autre particularité, le procédé d'administration d'un réseau est composé:

- d'une étape de réception de l'alarme par l'administrateur principal (AD) et de réception dudit message d'envoi par le serveur du module de sécurisation d'alarmes (sMSA).,
- d'une étape d'envoi d'un message de confirmation de réception par le serveur du module de sécurisation d'alarmes (sMSA) au client du module de sécurisation d'alarmes (cMSA),
- d'une étape de réception du message de confirmation de réception par le client du module de sécurisation d'alarmes (cMSA),
- d'une étape de mise à jour des instances d'alarmes stockées dans le module de filtrage d'alarmes (MFA).

Selon une autre particularité, lorsque le client du module de confirmation d'alarmes (MCA) n'a pas reçu le message de confirmation de réception, il renvoie, après un temps déterminé, l'alarme à l'administrateur principal (AD), l'alarme étant accompagnée d'un message d'envoi destiné au serveur du module de sécurisation d'alarmes (sMSA).

Selon une autre particularité, lorsque le module de calcul d'indicateurs (MCI) ou le module de découverte (MD) n'obtient pas de réponse à une requête envoyée à un équipement du sous-réseau, le module de calcul d'indicateurs (MCI) ou le module de découverte (MD) envoie un message à un module chien de garde (MCG), le module chien de garde (MCG) interrogeant l'équipement supposé disparu et attendant de manière plus longue, une réponse.

Selon une autre particularité, lorsque, après un temps déterminé, le module chien de garde (MCG) n'obtient pas de réponse de l'équipement supposé disparu, l'équipement est supprimé de la base de données du noyau (N), de la base de données du module de découverte (MD) et de la base de données du module de configuration des domaines (MCM), le module chien de garde (MCG) envoyant une alarme à l'administrateur principal (AD), lui indiquant la disparition de l'équipement, l'alarme étant perçue par l'administrateur comme provenant de l'équipement et envoyée en utilisant le module de sécurisation.

Selon une autre particularité, lorsque le module chien de garde (MCG) obtient une réponse de l'équipement supposé disparu, il demande la redécouverte des domaines, si la demande a été émise par le module de calcul d'indicateur.

Un autre but de l'invention est de fournir un système d'administration de réseaux et de systèmes.

Ce but est atteint par le système d'administration d'un réseau selon la revendication 9.

Selon une particularité de l'invention, le moyen de dialogue est constitué d'un noyau (N) dialoguant avec l'administrateur principal (AD) et permettant le dialogue entre les différents modules composant ledit système,

Selon une autre particularité, les moyens d'interroger les équipements du réseau local d'entreprise (RLE), de filtrer et de stocker les alarmes lancées par les agents (snmp) fonctionnant sur les équipements du réseau sont constitués

- d'un module de découverte (MD) découvrant les équipements (ET) du sous-réseau à administrer et classant lesdits équipements dans des domaines en fonction des types d'agents qui y sont installés. Ce module de découverte amplifie la fonction de découverte de l'administrateur central, par une précision accrue, une découverte plus rapide et une économie considérable en bande passante.
- d'un module de configuration de modèles (MCM) comportant des modèles de filtre d'alarmes et des indicateurs pouvant être instanciés sur les équipements du sous-réseau, chaque indicateur étant associé à une période d'interrogation,
- d'un module de calcul d'indicateurs (MCI) calculant le résultat de l'application d'un indicateur à un équipement, l'indicateur étant défini pour le domaine auquel l'équipement appartient, le résultat de cette application étant comparé à une valeur seuil ne devant pas être dépassée un certain nombre de fois, pendant un certain laps de temps.
- d'un module de filtrage d'alarmes (MFA) recevant les alarmes envoyées par les agents (snmp) fonctionnant sur les équipements du sous-réseau, puis, sélectionnant une partie desdites alarmes à l'aide d'un filtre défini pour un domaine donné, lesdites alarmes sélectionnées étant ré-émises vers l'administrateur principal (AD),

Selon une autre particularité, les moyens de sécuriser les alarmes envoyées à l'administrateur principal (AD) sont constitués :

- d'un module de chien de garde (MCG) qui, lorsqu'un module le lui demande, vérifie l'existence d'un équipement par l'envoi répété d'appels, si l'équipement disparu n'a pas répondu à un nombre prédéfini d'appels, ledit module chien de garde (MCG) envoie une alarme à l'administrateur principal. (AD) qui sera perçue par ce dernier comme provenant de l'équipement disparu,
- d'un module de sécurisation d'alarmes (MSA) fonctionnant selon le mécanisme client-serveur, le client (cMSA), lors de l'envoi d'au moins une alarme à l'administrateur, attendant un message de confirmation du serveur (sMSA) localisé sur l'administrateur principal (AD), ledit serveur (SMSA), après réception dudit message d'envoi, envoyant un message de confirmation de réception au client (cMSA), le client renvoyant l'alarme et un autre message d'envoi à administrateur lorsque, après un temps déterminé, le message de confirmation de réception n'est pas réceptionné par le client.

Selon une autre particularité, lorsque la, valeur seuil est dépassée un certain nombre de fois pendant un certain laps de temps, le module de calcul d'indicateurs (MCI) émet une alarme vers l'administrateur principal (AD), ladite alarme étant perçue par l'administrateur principal comme étant émise par l'équipement dont l'instanciation a été effectuée.
Selon une autre particularité, un indicateur est une équation appliquée à des instances d'objets d'une base de gestion d'informations (MIB), les instances étant obtenues par une interrogation des agents (SNMP) fonctionnant sur chacun des équipements du sous-réseau.
Selon une autre particularité, le résultat d'un indicateur et/ou une liste des alarmes envoyées peut être stocké dans un fichier archivé sur le disque dur.
Selon une autre particularité, le paramétrage des filtres d'alarmes s'effectue soit par un fichier d'initialisation soit via le protocole snmp.
Selon une autre particularité, les alarmes à envoyer sont accumulées par le module de confirmation d'alarmes afin de les envoyer groupées, par paquet, à une fréquence donnée.
Selon une autre particularité, un modèle de filtre d'alarmes contient une description de l'alarme à reconnaître et un nombre maximal d'occurrence d'alarmes avant lequel une autre alarme est émise vers l'administrateur principal (AD), si ledit nombre maximal d'occurrence d'alarmes est reçu pendant une certaine période.
Selon une autre particularité, les différents modules interrogent le noyau (N) pour initialiser leurs paramètres de fonctionnement.
Selon une autre particularité, le noyau (N) gère une base de données contenant toutes les instances de la base de gestion d'informations (MIB), ledit noyau comportant au moins deux supports (sockets) de communication et une interface commune de gestion de la communication avec les modules.
Selon une autre particularité, les paramètres d'initialisation du module de découverte (MD) comportent la période espaçant deux découvertes, le nombre minimum de systèmes à découvrir et le masque du protocole internet (IP) déterminant l'étendue du réseau à découvrir.
Selon une autre particularité, un équipement (ET) découvert est classé dans un ou plusieurs domaines en fonction de ses réponses aux interrogations effectuées sur chaque ensemble d'instances d'objets de la base de gestion d'informations (MIB) définissant un domaine.
D'autres particularités et avantages de la présente invention apparaîtront plus clairement à la lecture de la description ci-après faite en référence aux dessins annexés dans lesquels:

- la figure 1 représente un exemple d'implémentation du procédé d'administration de deux sous-réseaux,
- la figure 2 représente l'architecture du système d'administration,
- la figure 3 représente un exemple d'implémentation du procédé d'administration de n sites,
- la figure 4 représente un système d'administration classique.

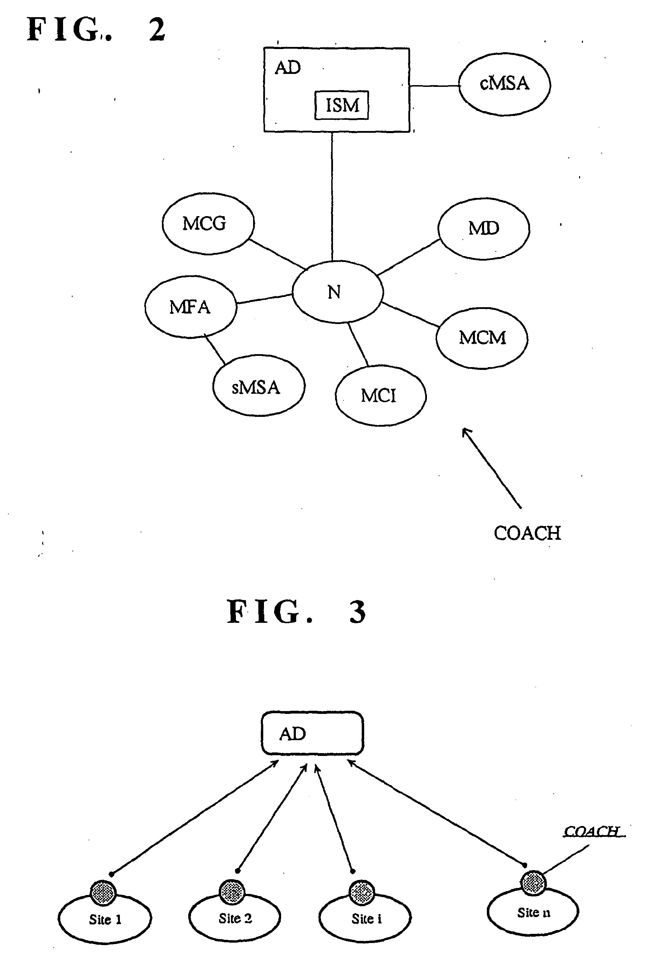

La présente invention propose un procédé et un système de gestion de réseaux totalement paramétrables à distance via un protocole standard : le protocole SNMP. Comme le montre la figure 1, le système d'administration de réseau est composé d'un administrateur (AD1) et d'au moins un sous-réseau local (RLE1, RLE2) relié à un agent ouvert central pour une administration concentrée (COACH, Central Open Agent for Concentrated Handling). Le sous-administrateur (COACH1) agit à un niveau intermédiaire d'administration. Situé sur le réseau local d'entreprises (RLE1), il permet de limiter le flux d'administration entre l'administrateur principal (AD1) et les équipements (ET) du réseau (RLE1). Il est perçu par les équipements du réseau comme un administrateur et par l'administrateur comme un équipement.
Le sous-administrateur (COACH), tel que représenté en figure 2, comporte un ensemble de processus aussi appelés "modules" qui dialoguent les uns avec les autres et avec l'administrateur principal (AD) par l'intermédiaire d'un processus central aussi appelé "noyau" (N). Les dialogues entre les différents modules se font par un support (socket) portable et standard. Chaque module est dédié à une fonction précise.

Le module central ou noyau (N) a deux fonctions principales. D'une part, il dialogue avec l'administrateur (AD) et d'autre part, il gère le dialogue entre les différents modules composant le sous-administrateur (COACH). En effet, le noyau (N) répond au dialogue (snmp), lorsque le sous-administrateur (COACH) est interrogé ou configuré par l'administrateur. Il existe deux types de dialogue avec les modules, c'est pourquoi deux supports (sockets) de communication sont souhaitables pour gérer le dialogue noyau-module. Le premier type de dialogue se fait à l'initiative du noyau et concerne les mises à jour d'instances ou les demandes d'informations sur une base de gestion d'informations (MIB) ou les transmissions de notifications provenant d'un autre module. Le second type de dialogue se fait à l'initiative des modules et concerne les demandes d'informations ou les mises, à jour d'instances de la base de gestion d'informations (MIB). Le noyau gère deux listes de supports. La création de support dans chacune de ces listes se fait dynamiquement lors de la connexion des modules. Pour le dialogue (snmp) avec l'administrateur, le standard impose l'utilisation d'un seul support (socket). Le dialogue se fait sur le port 161/udp, mais l'utilisation d'un dispatcher de requêtes nécessite l'utilisation d'un autre port paramétrable afin d'avoir la possibilité de faire fonctionner plusieurs agents (snmp) sur un même équipement. Pour simplifier la gestion de communication avec les modules, une interface commune est définie sous forme de librairie. Par ailleurs, le noyau (N) possède une mémoire cache (cache memory) (C) contenant toutes les informations résultant de l'administration d'un sous-réseau (RLE). Chaque module interroge le noyau pour initialiser ces paramètres de fonctionnement. En outre, le noyau (N) gère une base de données contenant toutes les instances de la base de gestion d'informations (MIB) du sous-réseau administré par le sous-administrateur (COACH).

Le module de découverte (MD) découvre le sous réseau (RLE1) sur lequel est installé le sous-administrateur (COACH11). A l'aide d'une table des masques d'adresse du protocole internet (IP, Internet Protocol), le module de découverte (MD) détermine les adresses (IP) des équipements (ET) que le sous-administrateur peut éventuellement administrer. Puis, le module de découverte (MD) interroge successivement par groupe de paquet internet (PING Packet Internet Groper) unitaire tous les équipements possibles. Le PING est une interrogation standard que l'on peut utiliser pour savoir si une machine est connectée sur le réseau Internet, pour déterminer la provenance d'un message ou pour vérifier si un système est toujours en activité. Lorsqu'un équipement est visible sur le réseau, il répond au PING.

Si un équipement est découvert, le module de découverte (MD) recherche son domaine. Chaque équipement appartient à un domaine. Le domaine de chaque équipement permet de définir des groupes d'indicateurs et de filtres d'alarme à injecter sur chacun des équipements et ceci, en fonction des agents présents sur ces équipements et donc en fonction des rôles dépourvus à chaque équipement.

Le domaine d'un équipement est défini selon la réponse ou non de l'équipement à un ensemble d'instances d'objets de la base de gestion d'informations (MIB snmp). Dès la découverte d'un nouvel équipement, une interrogation (polling) est effectuée sur un ensemble d'instances d'objets (snmp). Lorsqu'un équipement (ET) découvert répond aux interrogations de toutes les instances d'objets définissant un domaine, on dit que l'équipement appartient à ce domaine. Tous les équipements découverts sont classés selon des domaines. Ces domaines permettent de différencier les différents types d'équipements et d'administrer différemment chacun des équipements selon son domaine. Un équipement peut appartenir à plusieurs domaines.

Le domaine MIB2 pourrait, par exemple, être défini par la réponse à l'instance "sysUpTime0". Tous les équipements découverts sont interrogés sur cette instance. Ceux qui y répondent appartiennent au moins au domaine MIB2.

Enfin, lorsque le module de découverte (MD) a découvert un équipement et son domaine, il envoie une notification à un module de configuration des modèles (MCM) en lui indiquant l'adresse du protocole internet (IP) de l'équipement découvert et le domaine auquel cet équipement appartient. Avantageusement, le module de découverte (MD) envoie, de plus, ces mêmes informations au noyau (N) qui les stockera dans une base de données.

Généralement, lorsqu'un système existant est découvert une seconde fois, son domaine n'est pas, à nouveau, recherché. Néanmoins, le domaine d'un système peut être recherché en positionnant sur "actif" (ON) l'instance de la base de gestion d'informations (MIB) relative à la découverte des domaines. Dans ce cas si, le domaine n'est pas le même que le précédent, la base de données du noyau est automatiquement mise à jour et des notifications sont automatiquement envoyées au module de configuration des modèles (MCM).

Lorsqu'un équipement précédemment découvert ne répond plus à un PING unitaire, le modèle de découverte (MD) envoie une notification à un module (MCG) chien de garde (Watchdog) afin qu'il vérifie si l'équipement a réellement disparu du réseau.

Dès sa connexion, le module de découverte (MD) interroge le noyau (N) afin de connaître ses paramètres d'initialisation:

- la période entre deux découvertes successives,
- le nombre minimum de systèmes à découvrir,
- le masque du protocole internet (IP) déterminant l'étendue du réseau à découvrir.

Le module de découverte comporte des éléments de configuration de base, un ensemble d'instances d'objets de la base de gestion d'information (MIB) à interroger et la liste des systèmes découverts ainsi que leurs domaines.

L'annexe 7 présente un modèle de configuration de la découverte. L'annexe 8 présente les données dynamiques de découverte.

Le module de filtrage d'alarmes (MFA) reçoit les alarmes (traps) envoyées par les agents (snmp), implémentés sur les équipements (ET) et filtre les alarmes à réémettre vers l'administrateur principal (AD). Dès la réception d'une alarme, ce module tente de reconnaître dans quel domaine appartient l'équipement (ET) qui a envoyé cette alarme. Ce renseignement lui permettra de déterminer le modèle de filtre à appliquer à cette alarme. Un modèle de filtre d'alarmes est défini par une description de l'alarme à reconnaître (champs SNMP de description: Entreprise, générique, spécifique) et par un nombre maximal d'occurrence d'alarmes pendant une certaine période avant lequel une autre alarme est émise. Le choix du modèle de filtre se fait en fonction du domaine auquel l'équipement envoyant une alarme appartient. Lorsqu'une alarme n'est pas reconnue, elle est transmise à l'administrateur principal (AD). De plus, la première instance d'alarme reçue est toujours émise vers l'administrateur principal (AD). Par exemple, pour un équipement appartenant au domaine "Imprim", c'est-à-dire une imprimante, un modèle d'alarme indiquant "plus de papier dans l'imprimante" est défini. Ce modèle est instancié sur toutes les imprimantes du sous-réseau. Le modèle de filtre de cette alarme est décrit comme une alarme de niveau 0, envoyé à l'administrateur (AD). Ainsi, si l'un des agents des imprimantes émet cette alarme, le module de filtrage d'alarmes (MFA) ne transmettra aucune de ces alarmes à l'administrateur principal (AD). Si, ces mêmes imprimantes émettent une alarme de dysfonctionnement révélant un "problème réseau" et que le modèle de filtre de cette alarme est décrit comme étant de niveau 1 sur 50 en moins de 30 minutes, signifiant qu'il faut réémettre une alarme lorsque cinquante alarmes ont été reçues en moins de trente minutes, le module de filtrage d'alarmes (MFA) réémettra pour chaque imprimante la première alarme reçue, puis 1 sur 50 dans une période de 30 minutes. Si seulement deux alarmes arrivent à au moins trente minutes d'intervalle, elles seront toutes les deux transmises.

Le module de filtrage d'alarmes (MFA) est aussi à l'écoute du noyau (N). Ce dernier lui envoie des notifications de mise à jour de modèle de filtre d'alarmes. Les données contenues dans le module de filtrage d'alarmes (MFA) sont la description des modèles et des informations sur les instanciations de ces modèles (date de la première instance d'alarme reçue, nombre d'alarmes reçues pendant la période critique).

En outre, l'envoi d'alarmes peut être archivé dans un fichier sur le disque dur par l'emploi de la fonction "set" et l'administrateur peut le récupérer avec, par exemple, un protocole de transfert de fichiers (FTP, File Transfert Protocol). Les informations ainsi archivées concernent la date, l'enterprise, le générique et le spécifique d'une alarme émise. Un envoi d'alarme peut, par exemple, être tracé sous cette forme: Nov 19 19:32 1997; 1.3.6.1.4.1.107.144;6;1. Cette information doit être interprétée sous cette forme : le 19 novembre 1997, à 19h32, une alarme d'enterprise 1.3.6.1.4.1.107.144 de type générique 6 et spécifique 1 a été émise vers l'administrateur. L'envoi d'alarmes peut aussi être archivé dans une table des masques d'alarmes. Avantageusement, l'ensemble des informations contenues dans le message peut aussi être archivé.

L'annexe 2 présente un modèle de filtre d'alarmes. L'annexe 3 présente les données dynamiques d'un filtre d'alarmes.

Le module de calcul d'indicateur (MCI) calcule des indicateurs sur les équipements (ET) à administrer. Un indicateur est une équation dans laquelle des instances d'objets de gestion de base de d'informations (MIB snmp) sont introduites. Ces instances d'objets sont obtenues par l'interrogation (polling) sur les agents (snmp) fonctionnant sur chacun des systèmes à administrer. Le résultat de cette équation est comparé à une valeur seuil ne devant pas être dépassée un certain nombre de fois pendant un certain laps de temps. Lorsque la valeur seuil est dépassée, un certain nombre de fois pendant un certain laps de temps, une alarme est émise vers l'administrateur principal (AD).

Prenons l'exemple, d'un indicateur à instancier sur les équipements du domaine MIB2 comportant une période d'interrogation de 60 secondes. Cet indicateur calcule l'utilisation de la bande passante d'une carte de réseau quelconque à l'aide de l'équation:

$$(8 * \$ - (ifInOctets.1 + ifOutOctets.1) / ifSpeed. 1$$

Cette équation sera calculée sur chacun des équipements du domaine MIB2 toutes les minutes. Si, sur le système "A", le résultat excède la valeur 10 au moins deux fois en cinq minutes, une alarme sera envoyée à l'administrateur principal (AD). Et cette alarme sera perçue par ce dernier comme provenant du système "A".

Un indicateur comporte des opérateurs simples tels que l'addition (+), la soustraction (-), la multiplication (*), la division (/) et des opérateurs d'ensemble. Les opérateurs d'ensemble permettent d'appliquer un opérateur sur des séries d'instances d'indicateurs. Ainsi, l'opérateur :

- !SUM qui réalise la somme d'une série d'instances d'indicateurs,
- !MOY qui réalise une moyenne d'une série d'indicateurs,

- !MAX qui recherche la valeur maximum parmi une série d'indicateurs,
- !MIN qui recherche la valeur minimum parmi une série d'indicateurs.

Attention, les opérateurs d'ensemble sont appliqués à des systèmes et non au temps. L'annexe 9 nous décrit quelques exemples d'équations simples utilisant les opérateurs d'ensemble. De plus, un indicateur peut également comprendre un opérateur delta noté $- et un opérateur d'indirection temporel noté &. L'opérateur delta est défini tel que, à l'instant t, $-(x) = x(t) - x(t-T) où l'attribut x de valeur x(t- T) est recueilli à l'instant (t - T) et où la valeur $-(x) donne la différence entre x(t) et x(t- T). $- (x) correspond à un delta et $t à un delta(t). L'opérateur d'indirection temporel permet de réutiliser un calcul déjà effectué sur un équipement. Le module de calcul des instances (MCI) interroge le noyau pour initialiser ces paramètres de fonctionnement.

En fonctionnement, le module de configuration des modèles (MCM) notifie au module de calcul d'indicateurs (MCI) les modèles à instancier sur les équipements. Les données stockées dans le module de calcul d'indicateurs (MCI) sont les descriptions de modèles d'indicateurs (avec le nom du modèle), les instanciations de chacun des indicateurs et des informations de fonctionnement comme, par exemple, le dernier résultat de l'instance, la date de la prochaine interrogation de l'instance,..etc.

Le résultat de l'instanciation d'indicateurs peut être archivé d'une part dans un fichier sur le disque dur à l'aide de l'emploi de la fonction "set". L'utilisateur sélectionne nominativement les indicateurs qu'il veut journaliser (logger). Dans ce cas, l'administrateur peut le récupérer à l'aide d'un protocole de transfert de fichiers (FTP). D'autre part, le résultat de l'instanciation d'indicateurs est aussi stocké dans une table d'indicateurs accessible directement par une requête SNMP.

Les informations concernant les indicateurs ainsi archivés comportent la date, le modèle de l'indicateur interrogé, l'adresse (IP) de l'équipement interrogé et le résultat du calcul de l'indicateur. Un fichier archivé peut, par exemple, être tracé sous cette forme : Nov 27 11:44 1997;3; 129.184.59.7:271.4268. Ce fichier doit être interprété sous cette forme : le 27 novembre 1997, à 11 h44, l'équipement 129.184.59.7 a été interrogé sur le modèle 3 est le résultat est 271.4268.

Avantageusement, afin de limiter la taille du stockage des équations, les chaînes de caractères correspondant aux instances interrogées sont stockées dans un tableau et représentées par des identificateurs.

Remarquons que toutes les fonctions de calcul d'équations, de description de seuils, de définition de périodes de calcul, de fréquence maximale de dépassement de seuil, de sens de comparaison du résultat sont entièrement configurables à distance et dynamiquement via le protocole snmp.

L'annexe 5 présente un modèle d'indicateur. L'annexe 6 présente les données dynamiques d'indicateurs.

Lorsqu'un équipement ne répond plus aux sollicitations des modules de découvertes (MD) et de calcul d'indicateurs (MCI), le module (MCG) chien de garde (watchdog) vérifie si cette équipement a réellement disparu. En effet, cet équipement n'a pas été forcément supprimé. Un équipement peut ne plus ne plus être visible pendant un certain laps de temps en raison des aléas liés au trafic du réseau ou parce que le réseau local d'entreprise (RLE) est surchargé. Le rôle du module chien de garde (MCG) est de le vérifier.

Quand, le module de découverte (MD) ou le module de calcul d'indicateurs (MCI) prévient le module chien de garde (MCG) de l'éventuelle disparition d'un équipement, le module de chien de garde (MCG) sollicite, à nouveau, cet équipement mais de manière plus pressante. Il envoie un message à l'équipement supposé disparu et attend une réponse pendant un temps très long. Il laisse beaucoup plus de temps à l'équipement pour répondre. Si l'équipement répond, le module chien de garde (MCG) ne signale rien et par défaut, les modules de découverte (MD) et/ou le module de calcul d'indicateurs (MCI) supposent que l'équipement existe toujours. Si l'équipement ne répond pas, le module chien de garde envoie un nouveau message en laissant à l'équipement supposé disparu un temps de réponse encore plus iong. Après un certain nombre d'envois de messages, si l'équipement supposé disparu n'a toujours pas répondu aux différents messages, le module chien de garde (MCG) émet une alarme en direction de l'administrateur principal (AD) lui indiquant la disparition de cet équipement. Cette alarme est simulée comme provenant de l'équipement disparu. Ceci permet une valorisation de l'information et une simplification de visualisation au niveau de l'administrateur principal. Le module chien de garde (MCG) envoie des notifications au module de découverte (MD), au noyau (N) et au module de configuration des modèles (MCM) de manière à ce que l'équipement disparu soit supprimé de leurs bases de données.

Lorsqu'un équipement n'a pas répondu à la sollicitation du module de calcul d'indicateurs (MCI), mais que l'équipement répond à l'interrogation du module chien de garde, il est possible que des agents (snmp) aient été modifiés. Une redécouverte du domaine de ce système est alors automatiquement demandée.

Le module de sécurisation d'alarmes (MSA) permet de sécuriser les alarmes envoyées par le sous-administrateur (COACH) vers l'administrateur principal (AD). Ce module fonctionne selon un mécanisme client-serveur, le serveur du module de sécurisation d'alarmes (sMSA) est attaché à l'administrateur principal (AD) et le client du module de sécurisation d'alarmes est attaché au module de filtrage d'alarmes (MFA). Lorsqu'une alarme est envoyée à l'administrateur, elle est toujours accompagnée d'un message d'envoi envoyé par le client (cMSA) et destiné au serveur (sMSA). La réception de ce message d'envoi par le serveur (sMSA) implique automatiquement que l'administrateur ait reçu l'alarme accompagnant ce message. Lorsque le serveur (sMSA) réceptionne le message d'envoi, il envoie au client (cMSA) un message de confirmation de réception. Dès réception du message de confirmation de réception, le client (cMSA) enlève les instances d'alarmes stockées dans le module de filtrage d'alarmes (MFA). Lorsque, après un temps déterminé par avance, le client (cMSA) n'a pas reçu de message de confirmation de réception, il renvoie l'alarme accompagnée d'un nouveau message d'envoi à l'administrateur principal. Le client (cMSA) recommence cette opération jusqu'à ce qu'il reçoive un message de confirmation de réception.

La confirmation d'alarmes permet de garantir de manière quasiment absolue la réception des alarmes par l'administrateur. Le fonctionnement global a encore été amélioré par une fonction d'émission d'alarmes en bloc. Le module de sécurisation d'alarmes (MSA) a la possibilité de ne pas envoyer pas instantanément les alarmes mais les archive puis les envoie, par paquet, à une fréquence donnée. Les lignes de communication ne sont sollicitées que pendant cette période. La fréquence d'émission des alarmes est choisie lors du paramétrage du module de sécurisation d'alarmes. Ce principe est particulièrement intéressant pour les lignes du Réseau Numérique à Intégration de Service (RNIS) (Integrated Services Digital Network, ISDN) pour lesquelles l'ouverture d'une ligne prend du temps, et la fermeture s'effectue après un délai. Avantageusement, pour augmenter encore la sécurisation de ces alarmes, la ligne est ouverte quelques secondes avant l'envoi des alarmes.

Le module de configuration de modèles (MCM) permet d'indiquer dynamiquement aux modules de calcul d'indicateurs (MCI) et de filtre d'alarmes (MFA), les indicateurs et les modèles de filtrage d'alarmes à appliquer sur chacun des équipements (ET) du sous-réseau. Lors de la découverte d'un équipement, le module de découverte (MD) envoie une notification au module de configuration des modèles (MCM), lui indiquant l'adresse du protocole internet (adresse IP) de l'équipement découvert, ainsi que le domaine auquel il appartient. Le module de configuration des modèles (MCM) notifie, alors, l'indicateur, au module de calcul d'indicateurs (MCI) et le modèle de filtre, au module de filtrage d'alarmes.

Si, par exemple, un indicateur doit être instancié sur les systèmes MIB2, pour tous les systèmes découverts, le module de configuration des modèles (MCM) va indiquer l'instanciation de cet indicateur au module de calcul d'indicateurs (MCI).

Le module de configuration de modèles (MCM) comporte les correspondances entre les domaines et leurs modèles (de filtre et d'indicateur).

Le module de configuration de modèles (MCM) est composé d'une partie d'initialisation et d'une partie de mise à jour en fonctionnement. Lors de l'initialisation, les descriptions d'indicateurs et de modèles de filtre existant dans la base de données du noyau (N) sont détruites. Ces descriptions sont par la suite lues dans un fichier d'initialisation (confmod.ini).

Un exemple d'un fichier de configuration (confmod.ini) contenant un indicateur est décrit en annexe 4. Un indicateur est défini par différents champs :

| Champ | Définition |
|---|---|
| **Type :** | IND pour un modèle d'INDicateurs |
| **Id :** | Index d'indicateur (génération automatique) |
| **Nom :** | Nom de l'indicateur |
| **Domaine :** | Regroupement d'équipements administrés trouvés par leur adresse en domaines identifiables par 5 requêtes "Get" envoyées par le sous-administrateur (COACH). Cela signifie qu'aujourd'hui, il existe au plus 5 identifieurs d'objets (Oids) possibles pour définir un domaine |
| **Equation :** | Equation de l'indicateur |
| **T polling :** | Période d'interrogation ou de construction de l'indicateur |
| **Seuil :** | Seuil de décision pour l'émission d'une alarme |
| **Apparition :** | Nombre d'apparitions de la valeur seuil après laquelle il y a émission d'alarmes |
| **Période :** | Période au-delà de laquelle le nombre d'apparitions des x valeurs de seuil est remis à zéro |
| **Sens de comparaison :** | Sens de comparaison entre le seuil défini et le résultat de l'équation pour décrire un dépassement. Il peut être >, <, =, ou != |

(suite)

| Champ | Définition |
|---|---|
| **Booleen de Log de l'indicateur** | : Ce champ permet de créer un historique (logguer) sur l'indicateur en phase de journalisation générale. Il prend la valeur "LOG" pour logguer l'indicateur ou "NLOG" pour ne jamais logguer l'indicateur |

Un exemple d'un fichier de configuration (confmod.ini) contenant un modèle de filtre d'alarmes est décrit en annexe 1. Un modèle de filtre d'alarmes est défini par différents champs:

| Champ | Définition |
|---|---|
| **Type :** | FIL pour un modèle de FILtre |
| **id :** | Index du modèle de filtre (génération automatique) |
| **Nom :** | Nom du filtre |
| **Domaine :** | Regroupement des équipements administrés trouvés par leur adresse en domaines identifiable par 5 requêtes "Get" envoyées par le sous-administrateur COACH |
| **Enterprise :** | Champ "enterprise" de l'alarme à filtrer |
| **Generic :** | Champ "générique" de l'alarme à filtrer |
| **Spécific :** | Champ "spécifique" de l'alarme à filtrer |
| **Apparition :** | Nombre d'apparitions de l'alarme après laquelle, il y a réémission d'une alarme vers l'administrateur |
| **Période :** | Période au-delà de laquelle sans réception d'alarmes de ce type, le nombre d'apparition d'alarmes est remis à zéro. |

Après initialisation, le module de configuration des modèles (MCM) interroge le noyau afin de connaître tous les équipements découverts ainsi que leurs domaines. Puis, il envoie des notifications au module de filtrage d'alarmes (MFA) et au module de calcul d'indicateurs (MCI), leur indiquant les modèles à instancier selon les adresses du protocole internet (adresse IP) des équipements découverts.

En fonctionnement courant, le module de configuration des modèles (MCM) est à l'écoute du support (socket) de communication du noyau et attend des changements. Ces changements peuvent concerner soit l'ajout ou la suppression d'un équipement sur le réseau, soit des modifications d'indicateurs ou de modèles de filtre.

**ANNEXE 1**

```
# SECTION de description des filtres de traps
#
# Format de la ligne de description
#| Type| nom du trap| entreprise| Generic| Specific| limite en nb traps| période|

#
# AXA/COACH/unix/trapFilters
#
FIL 1 alix-fs-nfull 2 Bull. 118 6 4 1 60
FIL 2 alix-fs-error 2 1.3.6.1.4.1.107.114 6 5 100 6
FIL 3 alix-uxLoginSession-setFailed 2 Bull.118 6 33 3 30
FIL 4 trap_essai_4 1.3.6.1.4.1 107.144 6 7 3 10
FIL 5 trap_essai_5 1 1.3.6.1.4.107.144 6 8 2 10
FIL 6 alix-fs-nfull 2 Bull. 118 6 9 1 60
FIL 7 alix-fs-error 2 Bull.118 6 10 1 60
FIL 8 alix-uxLoginSession-setFailed 2 Bull.118 6 11 3 30
FIL 9 trap_essai_4 1 1.3.6.1.4.1.107.144 6 12 3 10
FIL 10 trap_essai_5 1 1.3.6.1.4.1.107.144 6 13 2 10
FIL 11 alix-fs-nfull 2 Bull.118 6 14 1 60
FIL 12alix_fs_error 2 Bull.118 6 15 1 60
FIL 13 alix-uxLoginSession-setFailed 2 Bull.118 6 133 3 30
FIL 14 trap_essai_4 1 1.3.6.1.4.1.107.144 6 17 3 10
FIL 15 trap_essai_51 1.3.6.1.4.1.107.144 6 18 2 10
```

```
FIL 16 alix-fs-nfull 2 Bull.118 6 19 1 60
FIL 17 alix_fs_error 2 Bull. 118 6 20 1 60
FIL 18 alix-uxLoginSession-SetFailed 2 Bull. 118 6 211 3 30
FIL 19 trap_essai_4 1 1.3.6.1.4.1.107.144 6 212 3 10
FIL 20 trap_essai_5 1 1.3.6.1.4.1.107.144 6 213 2 10
FIL 21 alix_fs_nfull 2 Bull. 118 6 24 1 60
FIL 22 alix-fs-error 2 Bull. 118 6 25 1 60
FIL 23 alix-uxLoginSession-setFailed 2 Bull.118 6 233 3 30
FIL 24 trap_essai_4 1 1.3.6.1.4.1.107.144 6 27 3 10
FIL 25 trap_essai_5 1 1.3.6.1.4.1.107.144 6 28 2 10
FIL 26 alix-fs-nfull 2 Bull.118 6 29 1 60
FIL 27 alix-fs-error 2 Bull.118 6 30 1 60
FIL 28 alix-uxLoginSession-setFailed 2 Bull.118 6 311 3 30
FIL 29 trap_essai_4 1 1.3.6.1.4.1.107.144 6 312 3 10
FIL 30 trap_essai_5 11.3.6.1.4.1.107.144 6 313 2 10
```

**ANNEXE 2**

```
-- Modèles de filtres

cfgFilterTable OBJECT-TYPE
   SYNTAX SEQUENCE OF CfgFilterEntry
   ACCESS not-accessible
   STATUS mandatory
   DESCRIPTION
       "Table de configuration des modeles de filtres."
   ::={ CoachCfg 2 }


cfgFilterEntry OBJECT-TYPE
   SYNTAX CfgFilterEntry
   ACCESS not-accessible
STATUS mandatory
   DESCRIPTION
       "Une entree (ligne) dans la table des modeles de filtres."
   INDEX { cfgFilterId }
   ::= { cfgFilterTable 1 }


CfgFilterEntry ::=
   SEQUENCE {
       cfgFilterId
               INTEGER,
       cfgFilterLabel
               OCTET STRING,
       cfgFilterDomain
               INTEGER,
       cfgFilterEnterprise
               OBJECT IDENTIFIER,
       cfgFilterGeneric
               INTEGER,
       cfgFilterspecific
               INTEGER,
       cfgFilterCptMax
               INTEGER,
       cfgFilterPeriodValid
               INTEGER
           }
   cfgFilterId OBJECT-TYPE
      SYNTAX INTEGER
      ACCESS read-only
      STATUS mandatory
```

```
        DESCRIPTION
            "La valeur de cet attribut identifie de maniere unique une entree dans
            la table des modeles de filtres."
        ::= { cfgFilterEntry 1 }

 cfgFilterLabel OBJECT-TYPE
        SYNTAX OCTET STRING
        ACCESS read-write
        STATUS mandatory
        DESCRIPTION
            "Description textuelle d'un modele de filtre."
        ::= { cfgFilterEntry 2 }


cfgFilterDomain OBJECT-TYPE
        SYNTAX INTEGER
        ACCESS read-write
        STATUS mandatory
        DESCRIPTION
            "Identifiant du domaine auquel appartient le modele de filtre."
        ::= { cfgFilterEntry 3 }


cfgFilterEnterprise OBJECT-TYPE
        SYNTAX OCTET STRING
        ACCESS read-write
        STATUS mandatory
        DESCRIPTION
            "Object Identifier de l'entreprise du trap."
        ::= { cfgFilterEntry 4 }


cfgFilterGeneric OBJECT-TYPE
        SYNTAX INTEGER
        ACCESS read-write
        STATUS mandatory
        DESCRIPTION
            "Numero generique du trap."
        ::= { cfgFilterEntry 5 }


cfgFilterSpecific OBJECT-TYPE
        SYNTAX INTEGER
        ACCESS read-write
        STATUS mandatory
        DESCRIPTION
            "Numero spécifique du trap."
        ::= { cfgFilterEntry 6 }


cfgFilterCptMax OBJECT-TYPE
        SYNTAX INTEGER
        ACCESS read-write
        STATUS mandatory
        DESCRIPTION
            "Nombre de fois ou le trap doit etre recu durant <cfgFilterPeriodValid>
            pour qu'il soit transmis."
        ::= {cfgFilterEntry 7 }


cfgFilterPeriodValid OBJECT-TYPE
        SYNTAX INTEGER
        ACCESS read-write
        STATUS mandatory
        DESCRIPTION
            "Periode (en secondes) durant laquelle le trap doit etre recu
            <cfgFilterCptMax> fois pour etre transmis."
        ::= {cfgFilterEntry8 }
```

**ANNEXE 3**

```
    -- Données de filtres

    filterTable OBJECT-TYPE
       SYNTAX SEQUENCE OF FilterEntry
       ACCESS not-accessible
       STATUS mandatory
       DESCRIPTION
            "Table associant un modele de filtre a une machine."
       ::= {CoachData 2 }

    filterEntry OBJECT-TYPE
       SYNTAX FilterEntry
      ACCESS not-accessible
       STATUS mandatory
      DESCRIPTION
            "Une entree (ligne dans la table des filtres."
       INDEX {filterId,filterIpAddress }
        ::= { filterTable 1 }

    FilterEntry ::=
       SEQUENCE {
            filterId
                    INTEGER,
            filterIpAddress
                    IpAddress
            }

    filterId OBJECT-TYPE
       SYNTAX INTEGER
       ACCESS read-only
       STATUS mandatory
       DESCRIPTION
            "Identifiant du filtre (le meme que <cfgFilterId>), la valeur de cet
            attribut identifie de maniere unique avec <filterIpAddress> une entree
            dans la table des filtres."
        ::= { filterEntry 1 }
    filterIpAddress OBJECT-TYPE
        SYNTAX IpAddress
        ACCESS read-only
        STATUS mandatory
        DESCRIPTION
            "Adresse IP de la machine emettrice du trap, la valeur de cet attribut
            identifie de maniere unique avec <filterId> une entree dans la table des
            filtres."
                            ::= { filterEntry2 }
```

**ANNEXE 4**

```
    # SECTION de description des indicateurs

    #

    # type :              IND | FIL respectivement INDicateurs ou FILtre

    # Id :                index d'indicateur (génération automatique)
```

```
# Nom :                      nom de l'indicateur

# Domaine :                  regroupement de systèmes managés trouvés par leur
                             adresse en domaines identifiables par 5 requêtes get
                             envoyées par COACH

# Equation :                 équation de l'indicateur

# T polling :                période de polling ou de construction de l'indicateur

# Seuil :                    seuil de décision pour l'émission d'un trap

# Apparition :               nombre d'apparitions de la valeur de seuil après laquelle,
                             il y a émission de traps

# Période :                  sur quelle période apparaissent les x valeurs de seuil

# Sens de comparaison :   sens de comparaison entre le seuil et le résultat

# Log :                      indique si l'indicateur devra être loggué ou non

#

# Format de la ligne de description

# | type | Id | Nom | Domaine | Equation | T polling | seuil | x fois | en T secondes |
sens du test | log

#

# AXA/COACH/internet/indicators

#

# % d'utilisation de la bande passante sur l'interface

IND 1 ifUtilizationBandWith 2(((8*$(ifInOctets.1+ifOutOctets.1))/$t)/ifSpeed.1)*100
600 10 1 1200 > LOG

# % d'utilisation de la bande passante sur le segment
IND 2 ifUtilizationBandWithAll 3 | SUM(ifUtilizationBandWith) 1210 10 1 3 3600 >
LOG

# Débit de réjection de paquets en entrée et sortie sur le segment
IND 3 ifDiscards 2 $-(ifInDiscards.1+ifOutDiscards.1) 120 1 1 120 > LOG

# Somme des débits de réjection de paquets en entrée et sortie sur le segment.
IND 4ifDiscardsAll 3| SUM(ifDiscards) 320 3 1 320 > LOG

# Longueur de la file d'attente des paquets en sortie sur l'interface
END 5 coachIfOutQlen 2 ifOutQLen. 1 330 5 1 330 > LOG

# Somme des Longueurs de la file d'attente des paquets en sortie sur toutes les interfaces
du segment
IND 6 coachIfOutQLenAll 3| SUM(coachIfOutQLen) 670 50 1 670 > LOG

# Nombre de paquets retransmis sur l'interface
IND 7 coachcpRetransSegs 2 tcpRetransSegs. 0 340 5 1 340 > LOG

# Débit d'erreurs sur l'interface
IND 8 ifErrors 2 ($(ifInErrors.1+ifOutErrors.1)$t) 290 5 1 290 > LOG

# Débit d'erreurs sur le segment
```

```
IND 9 ifErrorsSUM3 !SUM(ifErrors) 620 2 1 620 > LOG


# Débit moyen d'erreurs sur toutes les interfaces du segment
IND 10 ifErrorsMOY 3 (!MOY(ifErrors)*100) 630 5 1 630 > LOG


# Débit unicast sur l'interface en entrée et en sortie
IND 11 ifUcastPackets 2 (ifInUcastPkts.1+ifOutUcastPkts.1)$t 280 5 1 280 > LOG


# Débit multicast sur l'interface en entrée et en sortie
IND 12 ifNUPackets 2 (ifInNUcastPkts.1+ifOutNUcastPkts.1)$t280 5 1 280 >NLOG


# % d'erreurs sur l'interface par rapport au total des paquets émis ou reçus
IND 13 ifErrorsRatio 2 (&ifErrors/(&ifInPackets+&ifOutPackets)) *100 570 5 1570 >
NLOG


# % moyen sur le segment des erreurs sur toutes les interfaces du segment
END 14 ifErrorsRatioLinkMOY 3 !MOY(ifErrorsRatio) 1220 5 1 1220> LOG


# % Somme des pourcentages d'erreurs sur toutes les interfaces des liens
IND 15 IfErrorsRatioLinkSUM 3! SUM(ifErrorsRatio) 1220 20 1 1220> LOG


# Quantité d'erreurs d'en-tête et d'adresse sur l'interface. Utiliser pour calculer
ipInputErrorsPercent
IND 16 ipInputErrors 2$-(ipInHdrErrors.0+ipInAddrErrors.0) 650 5 1650 > LOG


# % d'erreurs d'en-tête et d'adresse sur l'interface
IND 17 ipInputErrorsPercent 2 (&ipInputErrors/($-(ipInDelivers.0)))*100 650 5 1 650
> LOG


# Somme des pourcentages d'erreurs d'en-tête et d'adresse sur l'interface
IND 18 ipInputErrorsPercentOnLink 3 !SUM(ipInputErrorsPercent) 300 5 1300 > LOG


# Indisponibilité d'une machine
IND 19 NoDisponibility 2-$t/($-(sysUpTime.0)) 100 1 1 300 > LOG


# Somme de l'indisponibilité pour l'ensemble des machines du segment
IND 20 NoDisponibilityOnLink 3 !SUM(NoDisponibiity) 150 100 1 300 > LOG


# 21/10/97 20:17 fichier : CONFMOD.DOC#version DRAFT
```

**ANNEXE 5**

```
Coach-MIB DEFINITIONS ::= BEGIN

bull            OBJECT IDENTIFIER ::={ enterprises 107}
gam             OBJECT IDENTIFIER : ::={ bull 146 }
Coach           OBJECT IDENTIFIER ::={ gam 1 }
CoachCfg        OBJECT IDENTIFIER ::={ Coach 1 }
CoachData       OBJECT IDENTIFIER ::={ Coach 2}
CoachSystem     OBJECT IDENTIFIER ::={ Coach 3 }


-–==============================
   -- Configuration de Coach
-–==============================


   -- Modeles d'indicateurs


   cfgIndicatorTable OBJECT-TYPE
      SYNTAX SEQUENCE OF CfgIndicatorEntry
     ACCESS not-accessible
```

```
         STATUS mandatory
         DESCRIPTION
             "Table de configuration des modeles d'indicateurs."
          ::= { CoachCfg 1 }

     cfgIndicatorEntry OBJECT-TYPE
       SYNTAX CfgIndicatorEntry
       ACCESS not-accessible
       STATUS mandatory
       DESCRIPTION
             "Une entree (ligne) dans la table des modeles d'indicateurs."
       INDEX { cfgIadicatorId }
       ::= { cfgIndicatorTable 1 }


     ComparaisonType ::= INTEGER {equal(0),less(1),greater(2)}


     CfgIndicatorEntry ::=
       SEQUENCE {
            cfgIndicatorId
                    INTEGER,
            cfgIndicatorLabel
                    OCTET STRING,
            cfgIndicatorDomain
                    INTEGER,
            cfgIndicatorEquation
                    OCTET STRING,
            cfgIndicatorPeriodPolling
                    INTEGER,
            cfgIndicatorThreeshold
                    INTEGER,
            cfgIndicatorCptMax
                    INTEGER,
            cfgIndicatorPeriodValid
                    INTEGER,
            cfgIndicatorComparaison
                    ComparaisonType
            }

     cfgIndicatorId OBJECT-TYPE
       SYNTAX INTEGER
       ACCESS read-only
       STATUS mandatory
       DESCRIPTION
             "La valeur de cet attribut identifie de maniere unique une entree dans
             la table des modeles d'indicateurs."
       ::= {cfgIndicatorEntry 1 }

     cfgIndicatorLabel OBJECT-TYPE
       SYNTAX OCTET STRING
       ACCESS read-write
       STATUS mandatory
       DESCRIPTION
             "Description textuelle d'un modele d'indicateur."
       ::= { cfgIndicatorEntry 2 }

     cfgIndicatorDomain OBJECT-TYPE
       SYNTAX INTEGER
      ACCESS read-write
       STATUS mandatory
       DESCRIPTION
             "Identifiant du domaine auquel appartient le modele d'indicateur."
       ::= {cfgIndicatorEntry 3 }
```

```
cfgIndicatorEquation OBJECT-TYPE
    SYNTAX OCTET STRING
    ACCESS read-write
    STATUS mandatory
    DESCRIPTION
        "Equation arithmetique decrivant le modele d'indicateur."
    ::= { cfgIndicatorEntry 4 }


cfgIndicatorPeriodPolling OBJECT-TYPE
    SYNTAX INTEGER
    ACCESS read-write
    STATUS mandatory
    DESCRIPTION
        "Periode (en secondes) a laquelle l'indicateur va etre calcule."
    ::= { cfgIndicatorEntry 5 }


cfgIndicatorThreeshold OBJECT-TYPE
    SYNTAX INTEGER
    ACCESS read-write
    STATUS mandatory
    DESCRIPTION
        "Seuil que doit depasser l'indicateur <cfgIndicatorCptMax> fois durant
        <cfgIndicatorPerioDVaLiD> pour qu'une alarme soit envoyee."
    ::= {cfgIndicatorEntry 6 }


cfgIndicatorCptMax OBJECT-TYPE
    SYNTAX INTEGER
    ACCESS read-write
    STATUS mandatory
    DESCRIPTION
        "Nombre de fois ou l'indicateur doit depasser <cfgIndicatorThreshold>
        durant <cfgIndicatorPeriodValid> pour qu'une alarme soit envoyee."
    ::= { cfgIndicatorEntry 7 }


cfgIndicatorPeriodValid OBJECT-TYPE
    SYNTAX INTEGER
    ACCESS read-write
    STATUS mandatory
    DESCRIPTION
        "Periode (en secondes) durant laquelle l'indicateur doit depasser
        <cfgIndicatorCptMax> fois <cfgIndicatorThreeshold> pour qu'une alarme
        soit envoyee."
    ::= { cfgIndicatorEntry 8 }


cfgIndicatorComparaison OBJECT-TYPE
    SYNTAX ComparaisonType
    ACCESS read-write
    STATUS mandatory
    DESCRIPTION
        "Type de comparaison entre le seuil <cfglndicatorThreeshold> et
        le resultat de l'équation <indicatorResult> "
    ::= {cfgIndicatorEntry 9 }
```

**ANNEXE 6**

```
-- Donnees d'indicateurs

 indicatorTable OBTECT-TYPE
    SYNTAX SEQUENCE OF IndicatorEntry
    ACCESS not-accessible
```

```
        STATUS mandatory
        DESCRIPTION
            "Table de resultats de calculs d'indicateurs."
        ::= { CoachData 1 }

    indicatorEntry OBJECT-TYPE
        SYNTAX IndicatorEntry
        ACCESS not-accessible
        STATUS mandatory
        DESCRIPTION
            "Une entree (ligne) dans la table des indicateurs."
        INDEX { indicatorId, indicatorIpAddress }
        ::= { indicatorTable 1 }


    IndicatorEntry ::=
        SEQUENCE {
            indicatorId
                    INTEGER,
            indicatorIpAddress
                    IpAddress,
            indicatorResult
                    INTEGER
             }


    indicatorId OBJECT-TYPE
        SYNTAX INTEGER
      ACCESS read-only
        STATUS mandatory
        DESCRIPTION
            "Identifiant de l'indicateur (le meme que <cfgIndicatorId>), la valeur
            de cet attribut identifie de maniere unique avec <indicatorIpAddress>
            une entree dans la table des indicateurs."
        ::= { indicatorEntry 1 }

    indicatorIpAddress OBJECT-TYPE
        SYNTAX IpAddress
        ACCESS read-only
        STATUS mandatory
        DESCRIPTION
            "Adresse IP de la machine sur lequel l'indicateur est calcule, la valeur
            de cet attribut identifie de manière unique avec <indicatorId> une
            entree dans la table des indicateurs."
        ::= { indicatorEntry 2 }

    indicatorResult OBJECT-TYPE
        SYNTAX INTEGER
        ACCESS read-only
        STATUS mandatory
        DESCRIPTION
            "Resultat du calcul de l'indicateur."
        ::= { indicatorEntry 3 }
```

**ANNEXE 7**

```
    -- Configuration de la découverte

    cfgDiscovery    OBJECT IDENTIFIER ::={ CoachCfg 4 }

    cfgDiscoverPeriod OBJECT-TYPE
        SYNTAX INTEGER
```

```
        ACCESS read-write
        STATUS mandatory
        DESCRIPTION
            "Periode (en secondes) a laquelle une decouverte est declenchee."
        ::= { cfgDiscovery 1 }


cfgDiscoverPeriodICMP OBJECT-TYPE
        SYNTAX INTEGER
        ACCESS read-write
        STATUS mandatory
        DESCRIPTION
            "Periode (en secondes) de l'ICMP renforce."
        ::= { cfgDiscovery 2 }


cfgDiscoverBroadcast OBJECT-TYPE
        SYNTAX IpAddress
        ACCESS read-write
        STATUS mandatory
        DESCRIPTION
            "Adresse broadcast du sous-reseau."
        ::= { cfgDiscovery 3 }


cfgDiscoverDomainAtNextTime OBJECT-TYPE
        SYNTAX INTEGER {
                yes (1),
                  no (2)
                  }
        ACCESS read-write
        STATUS mandatory
        DESCRIPTION
          "Redecouverte ou non des domaines au prochain Discovery."
        ::= { cfgDiscovery 4 }


 cfgDiscoverMaxDisc OBJECT-TYPE
        SYNTAX INTEGER
        ACCESS read-write
        STATUS mandatory
        DESCRIPTION
           "Nombre maximum de mauvaises decouvertes."
        ::= { cfgDiscovery 5 }


 cfgDiscoverMaxICMP OBJECT-TYPE
        SYNTAX INTEGER
        ACCESS read-write
        STATUS mandatory
        DESCRIPTION
           "Nombre maximum de mauvaises reponses ICMP."
        ::= { cfgDiscovery 6 }


cfgDiscoverMinMachine OBJECT-TYPE
        SYNTAX INTEGER
        ACCESS read-write
        STATUS mandatory
        DESCRIPTION
          "Nombre minimum de machines sur le sous-reseau."
        ::= { cfgDiscovery 7 }


cfgDiscoverTimeOut OBJECT-TYPE
        SYNTAX INTEGER
        ACCESS read-write
        STATUS mandatory
        DESCRIPTION
          "Time_out de l'envoi ICMP."
```

```
        ::= { cfgDiscovery 8 }

    cfgDiscoverTimeOutICMP OBJECT-TYPE
        SYNTAX INTEGER {
                    yes (1),
                    no (2)
                    }
       ACCESS read-write
       STATUS mandatory
       DESCRIPTION
           "Politique ICMP renforce lors de dépassement de time_out."
        ::= { cfgDiscovery 9 }
```

**ANNEXE 8**

```
    -- Donnees de decouverte

    discoverTable OBJECT-TYPE
       SYNTAX SEQUENCE OF DiscoverEntry
       ACCESS not-accessible
       STATUS mandatory
       DESCRIPTION
           "Table de decouverte des machines gerees par Coach."
        ::= { CoachData 3 }

    discoverEntry OBJECT-TYPE
        SYNTAX DiscoverEntry
       ACCESS not-accessible
       STATUS mandatory
       DESCRIPTION
           "Une entree (ligne) dans la table de decouverte."
       INDEX { discoverIpAddress }
        ::= { discoverTable 1 }

    DiscoverEntry ::=
       SEQUENCE {
           discoverIpAddress
                   IpAddress,
           discoverDomainId
                   INTEGER
               }

    discoverIpAddress OBJECT-TYPE
       SYNTAX IpAddress
       ACCESS read-write
       STATUS mandatory
       DESCRIPTION
           "Adresse IP de la machine, la valeur de cet attribut indentifie de
           maniere unique une entree dans la table de decouverte."
        ::= { discoverEntry 1 }

    discoverDomainId OBJECT-TYPE
       SYNTAX INTEGER
       ACCESS read-write
       STATUS mandatory
       DESCRIPTION
           "Identifiant du domaine auquel appartient la machine."
        ::= { discoverEntry 2 }
```

**ANNEXE 9**

| | |
|---|---|
| **X1 = !SUM (A)** | La somme X1 est réalisée sur toutes les instances A calculées par COACH. On obtient : X1=A1+A2+A3+A4 |
| **X2 = !MOY(A) - !MOY(B) + !SUM(C)** | On obtient : X2= (A1+A2+A3+A4)/4 + (B1+B2+B3+B4)/4 + (C1+C2+C3+C4) |
| **X3 = !MOY(A) - !MOY(B)** | On obtient X3 = (A1 +A2+A3+A4)/4 - (B1+B2+B3+B4)/4 |
| **X4 = !MAX(C)** | On obtient la valeur maximale des valeurs des indicateurs C sur toutes les machines sur lesquelles cet indicateur est instancié. X4 = MAX5C1, C2, C3, C4) |
| **X5 = !MIN(C)** | On obtient la valeur minimale des valeurs des indicateurs C sur toutes les machines sur lesquelles cet indicateur est instancié. |

X5 = MIN(C1, C2, C3, C4)

**Revendications**

1. Procédé d'administration d'un réseau, ce réseau étant doté d'au moins un sous-administrateur (COACH) situé dans l'arbre de contenance entre un administrateur principal (AD) et des équipements (ET) d'un sous-réseau, le sous-administrateur (COACH) étant localisé sur le sous-réseau (RLE) pour administrer le sous-réseau et comprenant différents modules qui communiquent entre eux et avec l'administrateur principal (AD) par l'intermédiaire d'un noyau (N), les modules du sous-administrateur (COACH) comprenant un module de découverte (MD), un module de configuration des modèles (MCM), un module de calcul d'indicateurs (MCI) et un module de filtrage d'alarmes (MFA), lesdits modules interrogeant les équipements (ET) du sous-réseau et recevant des alarmes lancées par des agents fonctionnant sur lesdits équipements (ET) du sous-réseau, le procédé comprenant :

   - une étape d'interrogation par le module de découverte (MD) de tous les équipements (ET) possibles du sous-réseau à administrer, pendant laquelle le module de découverte (MD) classifie lesdits équipements dans des domaines en fonction des types d'agents présents sur ces équipements, lorsqu'un équipement répond à l'interrogation,
   - une étape d'envoi d'une notification au module de configuration des modèles (MCM) par le module de découverte (MD), la notification permettant d'indiquer au module de configuration des modèles (MCM) l'adresse Internet de l'équipement découvert et le domaine auquel l'équipement découvert appartient,
   - une étape de notification par le module de configuration des modèles (MCM), pour notifier à un module de calcul d'indicateurs (MCI) un indicateur à instancier sur l'équipement et à un module de filtrage d'alarmes (MFA) le modèle de filtre à instancier sur l'équipement, l'indicateur étant une équation dans laquelle des instances d'objets de gestion de base d'informations sont introduites.

2. Procédé selon la revendication 1, **caractérisé en ce qu'**à chaque nouvelle étape de découverte des équipements du sous-réseau, le module de découverte (MD) met à jour des bases de données du noyau (N) et du module de configuration des modèles (MCM) contenant la liste des équipements et de leurs domaines.

3. Procédé selon la revendication 1, **caractérisé en ce que** toutes les alarmes émises par les différents modules sont envoyées à l'administrateur principal (AD) via le module de sécurisation d'alarmes (MSA), ladite alarme étant accompagnée d'un message d'envoi destiné au serveur du module de sécurisation d'alarmes (sMSA).

4. Procédé selon la revendication 3, **caractérisé en ce qu'**il est composé :

- d'une étape de réception de l'alarme par l'administrateur principal (AD) et de réception dudit message d'envoi par le serveur du module de sécurisation d'alarmes (sMSA),
- d'une étape d'envoi d'un message de confirmation de réception par le serveur du module de sécurisation d'alarmes (sMSA) au client du module de sécurisation d'alarmes (cMSA),
- d'une étape de réception du message de confirmation de réception par le client du module de sécurisation d'alarmes (cMSA),
- d'une étape de mise à jour des instances d'alarmes stockées dans le module de filtrage d'alarmes (MFA).

**5.** Procédé selon la revendication 4, **caractérisé en ce** lorsque le client du module de sécurisation d'alarmes (cMSA) n'a pas reçu le message de confirmation de réception, il renvoie, après un temps déterminé, l'alarme à l'administrateur principal (AD), l'alarme étant accompagnée d'un message d'envoi destiné au serveur du module de sécurisation d'alarmes (sMSA).

**6.** Procédé selon la revendication 1, **caractérisé en ce que** lorsque le module de calcul d'indicateurs (MCI) ou le module de découverte (MD) n'obtient pas de réponse à une requête envoyée à un équipement du sous-réseau, le module de calcul d'indicateurs (MCI) ou le module de découverte (MD) envoie un message à un module chien de garde (MCG), le module chien de garde (MCG) interrogeant l'équipement supposé disparu et attendant de manière plus longue, une réponse.

**7.** Procédé selon la revendication 6, **caractérisé en ce que** lorsque, après un temps déterminé, le module chien de garde (MCG) n'obtient pas de réponse de l'équipement supposé disparu, l'équipement est supprimé de la base de données du noyau (N), de la base de données du module de découverte (MD) et de la base de données du module de configuration des domaines (MCM), le module chien de garde (MCG) envoyant une alarme à l'administrateur principal (AD), lui indiquant la disparition de l'équipement, l'alarme étant perçue par l'administrateur comme provenant de l'équipement à travers le module de sécurisation et envoyée en utilisant le module de sécurisation.

**8.** Procédé selon la revendication 6, **caractérisé en ce que** lorsque le module chien de garde (MCG) obtient une réponse de l'équipement supposé disparu, il demande la redécouverte des domaines si la demande a été émise par le module de calcul d'indicateur.

**9.** Système d'administration d'un réseau par un administrateur principal (AD) communiquant avec des équipements (ET) d'au moins un réseau local d'entreprise (RLE) à travers un réseau grande distance (WAN), le système comprenant le réseau, l'administrateur principal, les équipements, le réseau local d'entreprise et le réseau grande distance, le système comprenant au moins un sous-administrateur (COACH) localisé sur le réseau local d'entreprise (RLE) et administré par l'administrateur principal (AD), ledit sous-administrateur (COACH) comportant différents modules recevant des alarmes lancées par des agents fonctionnant sur lesdits équipements (ET), les modules incluant des moyens (MD, MFA) d'interroger les équipements (ET) du réseau local d'entreprise (RLE), de filtrer et de stocker les alarmes lancées par les agents fonctionnant sur les équipements (ET) du réseau local d'entreprise (RLE), le sous-administrateur (COACH) comprenant également un moyen de dialogue avec l'administrateur principal (AD) et entre les différents modules,
lesdits moyens d'interroger les équipements (ET) étant agencés pour découvrir les équipements (ET) du sous-réseau à administrer
**caractérisé en ce que** lesdits moyens d'interroger les équipements (ET) étant agencés pour classifier lesdits équipements dans des domaines en fonction des types d'agents présents sur ces équipements et **en ce que** le sous-administrateur (COACH) comprend également des moyens de sécuriser les alarmes envoyées à l'administrateur principal (AD).

**10.** Système selon la revendication 9, **caractérisé en ce que** le moyen de dialogue est constitué d'un noyau (N) dialoguant avec l'administrateur principal (AD) et permettant le dialogue entre les différents modules composant ledit système,

**11.** Système selon la revendication 9, **caractérisé en ce que** les moyens d'interroger les équipements du réseau local d'entreprise (RLE), de filtrer et de stocker les alarmes lancées par les agents fonctionnant sur les équipements du réseau comprennent :

- un module de configuration de modèles (MCM) comportant des modèles de filtre d'alarmes et des indicateurs pouvant être automatiquement instanciés sur les équipements du sous-réseau, chaque indicateur étant associé à une période d'interrogation, un indicateur étant une équation dans laquelle des instances d'objets de gestion de base d'informations sont introduites,

- un module de calcul d'indicateurs (MCI) calculant le résultat de l'application d'un indicateur à un équipement, l'indicateur étant défini pour le domaine auquel l'équipement appartient, le résultat de cette application étant comparé à une valeur seuil ne devant pas être dépassée un certain nombre de fois, pendant un certain laps de temps,

- un module de filtrage d'alarmes (MFA) recevant les alarmes envoyées par les agents fonctionnant sur les équipements du sous-réseau, puis, sélectionnant une partie desdites alarmes à l'aide d'un filtre défini pour un domaine donné, lesdites alarmes sélectionnées étant ré-émises vers l'administrateur principal (AD).

12. Système selon la revendication 9, **caractérisé en ce que** les moyens de sécuriser les alarmes envoyées à l'administrateur principal (AD) sont constitués :

- d'un module de chien de garde (MCG) adapté à, lorsqu'un module le lui demande, vérifier l'existence d'un équipement par l'envoi répété d'appels, ledit module de chien de garde étant adapté à, si l'équipement disparu n'a pas répondu à un nombre prédéfini d'appels, envoyer une alarme à l'administrateur principal (AD) qui sera perçue par ce dernier comme provenant de l'équipement disparu,

- d'un module de sécurisation d'alarmes (MSA) fonctionnant selon le mécanisme client-serveur, le client (cMSA), lors de l'envoi d'au moins une alarme à l'administrateur, attendant un message de confirmation du serveur (sMSA) localisé sur l'administrateur principal (AD), ledit serveur (sMSA), après réception dudit message d'envoi, envoyant un message de confirmation de réception au client (cMSA), le client renvoyant l'alarme et un autre message d'envoi à administrateur lorsque, après un temps déterminé, le message de confirmation de réception n'est pas réceptionné par le client.

13. Système selon la revendication 11, **caractérisé en ce que** lorsque la valeur seuil est dépassée un certain nombre de fois pendant un certain laps de temps, le module de calcul d'indicateurs (MCI) étant adapté à émettre une alarme vers l'administrateur principal (AD), ladite alarme étant perçue par l'administrateur principal comme étant émise par l'équipement dont l'instanciation a été effectuée.

14. Système selon la revendication 11, dans lequel les instances sont obtenues par une interrogation des agents fonctionnant sur chacun des équipements du sous-réseau.

15. Système selon la revendication 11, **caractérisé en ce que** le résultat d'un indicateur et/ou une liste des alarmes envoyées peut être stocké dans un fichier archivé sur le disque dur.

16. Système selon la revendication 11, **caractérisé en ce que** le paramétrage des filtres d'alarmes s'effectue soit par un fichier d'initialisation soit via le protocole snmp.

17. Système selon la revendication 9, **caractérisé en ce que** les alarmes à envoyer sont accumulées par le module de confirmation d'alarmes afin de les envoyer groupées, par paquet, à une fréquence donnée.

18. Système selon la revendication 9, **caractérisé en ce qu'**un modèle de filtre d'alarmes contient une description de l'alarme à reconnaître et un nombre maximal d'occurrence d'alarmes avant lequel une autre alarme est émise vers l'administrateur principal (AD), si ledit nombre maximal d'occurrence d'alarmes est reçu pendant une certaine période.

19. Système selon la revendication 10, **caractérisé en ce que** les différents modules sont adaptés à interroger le noyau (N) pour initialiser leurs paramètres de fonctionnement.

20. Système selon la revendication 10, **caractérisé en ce que** le noyau (N) est adapté à gérer une base de données contenant toutes les instances de la base de gestion d'informations, ledit noyau comportant au moins deux supports de communication et une interface commune de gestion de la communication avec les modules.

21. Système selon la revendication 19, **caractérisé en ce que** les paramètres d'initialisation du module de découverte (MD) comportent la période espaçant deux découvertes, le nombre minimum de systèmes à découvrir et le masque du protocole Internet déterminant l'étendue du réseau à découvrir.

22. Système selon la revendication 9, **caractérisé en ce qu'**un équipement (ET) découvert est classé dans un ou plusieurs domaines en fonction de ses réponses aux interrogations effectuées sur chaque ensemble d'instances d'objets de la base de gestion d'informations définissant un domaine.

**Claims**

1. Network administration method, this network being provided with at least one sub-administrator (COACH) located in the containment tree between a main administrator (AD) and the equipment (ET) of a sub-network, the sub-administrator (COACH) being located on the sub-network (RLE) in order to administer the sub-network and comprising various modules that communicate between themselves and with the main administrator (AD) via a kernel (N), the modules of the sub-administrator (COACH) comprising a discovery module (MD), a model configuration module (MCM), an indicator calculation module (MCI) and an alarm filtering module (MFA), said modules interrogating the equipment (ET) of the sub-network and receiving alarms triggered by the agents operating on said equipment (ET) of the sub-network, the method comprising:

   - a step in which the discovery module (MD) interrogates all the possible equipment (ET) of the sub-network to be administered, during which step the discovery module (MD) classifies said equipment into domains as a function of the types of agents present on this equipment, when a piece of equipment responds to the interrogation,
   - a step of sending a notification to the model configuration module (MCM) by the discovery module (MD), the notification making it possible to indicate to the model configuration module (MCM) the Internet address of the equipment discovered and the domain to which the equipment discovered belongs,
   - a step of notification by the model configuration module (MCM), in order to notify an indicator calculation module (MCI) of an indicator to be instantiated on the equipment and to notify an alarm filtering module (MFA) of the filter model to be instantiated on the equipment, the indicator being an equation in which object instances of information base management are introduced.

2. Method according to Claim 1, **characterised in that** at each new step of discovering equipment on the sub-network, the discovery module (MD) updates databases of the kernel (N) and of the model configuration module (MCM) containing the list of the pieces of equipment and their domains.

3. Method according to Claim 1, **characterised in that** all the alarms sent by the different modules are sent to the main administrator (AD) via le alarm securisation module (MSA), said alarm being accompanied by a sending message sent to the server of the alarm securisation module (sMSA).

4. Method according to Claim 3, **characterised in that** it is composed of:

   - a step of receiving the alarm by the main administrator (AD) and of receiving said sending message by the server of the alarm securisation module (sMSA),
   - a step of sending a confirmation-of-receipt message by the server of the alarm securisation module (sMSA) to the client of the alarm securisation module (cMSA),
   - a step of receiving the confirmation-of-receipt message by the client of the alarm securisation module (cMSA),
   - a step of updating the instances of alarms stored in the alarm filtering module (MFA).

5. Method according to Claim 4, **characterised in that** when the client of the alarm securisation module (cMSA) has not received the confirmation-of-receipt message, after a given period of time, it sends the alarm back to the main administrator (AD), the alarm being accompanied by a sending message addressed to the server of the alarm securisation module (sMSA).

6. Method according to Claim 1, **characterised in that** when the indicator calculation module (MCI) or the discovery module (MD) does not get a reply to a request sent to a piece of equipment in the sub-network, the indicator calculation module (MCI) or the discovery module (MD) sends a message to a watchdog module (MCG), the watchdog module (MCG) interrogating the piece of equipment assumed to have disappeared and waiting longer for a reply.

7. Method according to Claim 6, **characterised in that** when, after a given period of time, the watchdog module (MCG) does not get a reply from the equipment assumed to have disappeared, the equipment removed from the database of the kernel (N), from the database of the discovery module (MD) and from the database of the domain configuration module (MCM), the watchdog module (MCG) sending an alarm to the main administrator (AD), notifying it of the disappearance of the equipment, the alarm being perceived by administrator as coming from the equipment through the securisation module and sent using the securisation module.

8. Method according to Claim 6, **characterised in that** when the watchdog module (MCG) gets a reply from the equipment assumed to have disappeared, it requests the rediscovery of the domains if the request has been sent by the indicator calculation module.

9. System of network administration by a main administrator (AD) communicating with the equipment (ET) of at least one corporate local area network (RLE) across a wide area network (WAN), the system comprising the network, the main administrator, the equipment, the corporate local area network and the wide area network, the system comprising at least one sub-administrator (COACH) located on the corporate local area network (RLE) and administered by the main administrator (AD), said sub-administrator (COACH) including different modules receiving alarms triggered by the agents operating on said equipment (ET), the modules including means (MD, MFA) for interrogating the equipment (ET) of the corporate local area network (RLE), for filtering and storing the alarms triggered by the agents operating on the equipment (ET) of the corporate local area network (RLE), the sub-administrator (COACH) also comprising a means for dialogue with the main administrator (AD) and between the various modules, said means for interrogating the equipment (ET) being arranged so as to discover the equipment (ET) of the sub-network to be administered, **characterised in that** said means for interrogating the equipment (ET) being arranged so as to classify said equipment into domains as a function of the types of agents present in this equipment, and **in that** the sub-administrator (COACH) also comprises means for securising the alarms sent to the main administrator (AD).

10. System according to Claim 9, **characterised in that** the dialogue means is constituted by a kernel (N) dialoguing with the main administrator (AD) and allowing dialogue between the various modules making up said system,

11. System according to Claim 9, **characterised in that** the means for interrogating the equipment of the corporate local area network (RLE), for filtering and storing the alarms triggered by the agents operating on the equipment of the network comprise:

    - a model configuration module (MCM) including alarm filter models and indicators that can be automatically instantiated on the equipment of the sub-network, each indicator being associated with an interrogation period, an indicator being an equation into which object instances of information base management are introduced,
    - an indicator calculation module (MCI) calculating the result of the application of an indicator to a piece of equipment, the indicator being defined for the domain to which the equipment belongs, the result of this application being compared with a threshold value that must not be exceeded a certain number of times, during a certain period of time.
    - an alarm filtering module (MFA) receiving alarms sent by the agents operating on the equipment of the sub-network, then, selecting a portion of said alarms using a filter defined for a given domain, said selected alarms being sent back to the main administrator (AD),

12. System according to Claim 9, **characterised in that** the means for securising the alarms sent to the main administrator (AD) are constituted by:

    - a watchdog module (MCG) adapted, when a module requests this, to verify the existence of a piece of equipment by repeatedly sending calls, said watchdog module being adapted, if the disappeared equipment has not replied to a predefined number of calls, to send an alarm to the main administrator (AD), which will be perceived by the latter as coming from the disappeared equipment,
    - an alarm securisation module (MSA) operating according to the client-server mechanism, the client (cMSA), when sending at least one alarm to the administrator, waiting for a confirmation message from the server (sMSA) located on the main administrator (AD), said server (sMSA), after receiving said sending message, sending a confirmation-of-receipt message to the client (cMSA), the client sending the alarm and another sending message back to the administrator when, after a given period of time, the confirmation-of-receipt message is not acknowledged by the client.

13. System according to Claim 11, **characterised in that** when the threshold value is exceeded a certain number of times during a certain period of time, the indicator calculation module (MCI) being adapted to send an alarm to the main administrator (AD), said alarm being perceived by the main administrator as being sent by the equipment for which instantiation has been performed.

14. System according to Claim 11, in which the instances are obtained by interrogating the agents operating on each of the pieces of equipment of the sub-network.

15. System according to Claim 11, **characterised in that** the result of an indicator and/or a list of the alarms sent can be stored in a file archived on the hard disk.

16. System according to Claim 11, **characterised in that** the parameterisation of the alarm filters is carried out either by an initialisation file or via the snmp protocol.

17. System according to Claim 9, **characterised in that** the alarms to be sent are accumulated by the alarm confirmation module so as to send them, grouped in packets, at a given frequency.

18. System according to Claim 9, **characterised in that** an alarm filter model contains a description of the alarm to be recognised and a maximum number of occurrences of alarms before which another alarm is sent to the main administrator (AD), if said maximum number of occurrences of alarms is received during a certain period.

19. System according to Claim 10, **characterised in that** the various modules are adapted to interrogate the kernel (N) in order to initialise their operating parameters.

20. System according to Claim 10, **characterised in that** the kernel (N) is adapted to manage a database containing all the instances of the information management base, said kernel including at least two communication media and a common communication management interface with the modules.

21. System according to Claim 19, **characterised in that** the initialisation parameters of the discovery module (MD) include the period separating two discoveries, the minimum number of systems to be discovered and the mask of the Internet protocol determining the extent of the network to be discovered.

22. System according to Claim 9, **characterised in that** a piece of equipment (ET) discovered is classified into one or more domains as a function of its responses to the interrogations made on each set of object instances of the information management base defining a domain.

**Patentansprüche**

1. Verfahren für das Management eines Netzes, wobei dieses Netz mit wenigstens einem Unter-Administrator (COACH) versehen ist, der sich im Inhaltsbaum zwischen einem Haupt-Administrator (AD) und Ausrüstungen (ET) eines Unternetzes befindet, wobei der Unter-Administrator (COACH) in dem Unternetz (RLE) lokalisiert ist, um das Unternetz zu managen, und verschiedene Module umfasst, die miteinander und mit dem Haupt-Administrator (AD) über einen Kern (N) kommunizieren, wobei die Module des Unter-Administrators (COACH) ein Entdeckungsmodul (MD), ein Modellkonfigurationsmodul (MCM), ein Indikatorberechnungsmodul (MCI) und ein Alarmfilterungsmodul (MFA) umfassen, wobei die Module die Ausrüstungen (ET) des Unternetzes abfragen und Alarme empfangen, die von Agenten ausgelöst werden, die in den Ausrüstungen (ET) des Unternetzes arbeiten, wobei das Verfahren umfasst:

    - einen Schritt des Abfragens aller möglichen Ausrüstungen (ET) des Unternetzes, das gemanagt werden soll, durch das Entdeckungsmodul (MD), währenddessen das Entdeckungsmodul (MD) die Ausrüstungen in Abhängigkeit von den Typen von Agenten, die in diesen Ausrüstungen vorhanden sind, in Domänen klassifiziert, wenn eine Ausrüstung auf die Abfrage antwortet,
    - einen Schritt des Sendens einer Meldung an das Modellkonfigurationsmodul (MCM) durch das Entdeckungsmodul (MD), wobei die Meldung ermöglicht, dem Modellkonfigurationsmodul (MCM) die Internet-Adresse der entdeckten Ausrüstung und die Domäne, zu der die entdeckte Ausrüstung gehört, anzugeben,
    - einen Schritt des Meldens durch das Modellkonfigurationsmodul (MCM), um einem Indikatorberechnungsmodul (MCI) einen Indikator zu melden, der in der Ausrüstung instanziiert werden soll, und um einem Alarmfilterungsmodul (MFA) das Filtermodell zu melden, das in der Ausrüstung instanziiert werden soll, wobei der Indikator eine Gleichung ist, in die Datenbasismanagement-Objektinstanzen eingegeben werden.

2. Verfahren nach Anspruch 1, **dadurch gekennzeichnet, dass** in jedem neuen Schritt des Entdeckens von Ausrüstungen des Unternetzes das Entdeckungsmodul (MD) Datenbasen des Kerns (M) und des Modellkonfigurationsmoduls (MCM), die die Liste der Ausrüstungen und ihrer Domänen enthalten, aktualisiert.

3. Verfahren nach Anspruch 1, **dadurch gekennzeichnet, dass** alle Alarme, die von den verschiedenen Modulen ausgesendet werden, zum Haupt-Administrator (AD) über das Alarmsicherungsmodul (MSA) geschickt werden, wobei der Alarm von einer Sendenachricht begleitet wird, die für den Server des Alarmsicherungsmoduls (sMSA) bestimmt ist.

4. Verfahren nach Anspruch 3, **dadurch gekennzeichnet, dass** es gebildet ist aus:

   - einem Schritt des Empfangens des Alarms durch den Haupt-Administrator (AD) und des Empfangens der Sendenachricht durch den Server des Alarmsicherungsmoduls (sMSA),
   - einem Schritt des Schickens einer Empfangsbestätigungsnachricht durch den Server des Alarmsicherungsmoduls (sMSA) zu dem Client des Alarmsicherungsmoduls (cMSA),
   - einem Schritt des Empfangens der Empfangsbestätigungsnachricht durch den Client des Alarmsicherungsmoduls (cMSA),
   - einem Schritt des Aktualisierens der Alarminstanzen, die in dem Alarmfilterungsmodul (MFA) gespeichert sind.

5. Verfahren nach Anspruch 4, **dadurch gekennzeichnet, dass** der Client des Alarmsicherungsmoduls (cMSA) dann, wenn er die Empfangsbestätigungsnachricht nicht empfangen hat, nach einer bestimmten Zeit den Alarm zu dem Haupt-Administrator (AD) zurückschickt, wobei der Alarm von einer Sendenachricht begleitet wird, die für den Server des Alarmsicherungsmoduls (sMSA) bestimmt ist.

6. Verfahren nach Anspruch 1, **dadurch gekennzeichnet, dass** das Indikatorberechnungsmodul (MCI) oder das Entdeckungsmodul (MD) dann, wenn es keine Antwort auf eine zu einer Ausrüstung des Unternetzes geschickte Anforderung erhält, eine Nachricht an ein Wachhund-Modul (MCG) schickt, wobei das Wachhund-Modul (MCG) die vermutlich verschwundene Ausrüstung abfragt und länger auf eine Antwort wartet.

7. Verfahren nach Anspruch 6, **dadurch gekennzeichnet, dass** dann, wenn nach einer bestimmten Zeit das Wachhund-Modul (MCG) keine Antwort von der vermutlich verschwundenen Ausrüstung erhält, die Ausrüstung aus der Datenbasis des Kerns (N), der Datenbasis des Entdeckungsmoduls (MD) und der Datenbasis des Domänenkonfigurationsmoduls (MCM) entfernt wird, wobei das Wachhund-Modul (MCG) einen Alarm zu dem Haupt-Administrator (AD) schickt, der ihm das Verschwinden der Ausrüstung angibt, wobei der Alarm von dem Administrator so wahrgenommen wird, als ob er von der Ausrüstung über das Sicherungsmodul käme und unter Verwendung des Sicherungsmoduls geschickt worden sei.

8. Verfahren nach Anspruch 6, **dadurch gekennzeichnet, dass** das Wachhund-Modul (MCG) dann, wenn es eine Antwort von der vermutlich verschwundenen Ausrüstung erhält, die Wiederentdeckung der Domänen fordert, falls die Anfrage von dem Indikatorberechnungsmodul ausgesendet worden ist.

9. System für das Management eines Netzes durch einen Haupt-Administrator (AD), der mit den Ausrüstungen (ET) wenigstens eines lokalen Firmennetzes (RLE) über ein Weitbereichsnetz (WAN) kommuniziert, wobei das System das Netz, den Haupt-Administrator, die Ausrüstungen, das lokale Firmennetz und das Weitbereichsnetz umfasst, wobei das System wenigstens einen Unter-Administrator (COACH) enthält, der in dem lokalen Firmennetz (RLE) lokalisiert ist und durch den Haupt-Administrator (AD) gemanagt wird, wobei der Unter-Administrator (COACH) verschiedene Module enthält, die Alarme empfangen, die von Agenten ausgelöst werden, die in den Ausrüstungen (ET) arbeiten, wobei die Module Mittel (MD, MFA) enthalten, um die Ausrüstungen (ET) des lokalen Firmennetzes (RLE) abzufragen, um die von den in den Ausrüstungen (ET) des lokalen Firmennetzes (RLE) arbeitenden Agenten ausgelösten Alarme zu filtern und zu speichern, wobei der Unter-Administrator (COACH) außerdem ein Mittel für den Dialog mit dem Haupt-Administrator (AD) und zwischen den verschiedenen Modulen umfasst, wobei die Mittel zum Abfragen der Ausrüstungen (ET) so beschaffen sind, dass sie die Ausrüstungen (ET) des Unternetzes, die gemanagt werden sollen, entdecken,
   **dadurch gekennzeichnet, dass** die Mittel zum Abfragen der Ausrüstungen (ET) so beschaffen sind, dass sie die Ausrüstungen in Abhängigkeit von den Typen von Agenten, die in diesen Ausrüstungen vorhanden sind, in Domänen klassifizieren, und dass der Unter-Administrator (COACH) außerdem Mittel zum Sichern der zum Haupt-Administrator (AD) geschickten Alarme enthält.

10. System nach Anspruch 9, **dadurch gekennzeichnet, dass** das Dialogmittel aus einem Kern (N) gebildet ist, der mit dem Haupt-Administrator (AD) einen Dialog führt und den Dialog zwischen den verschiedenen Modulen, die das System aufbauen, ermöglicht.

11. System nach Anspruch 9, **dadurch gekennzeichnet, dass** die Mittel zum Abfragen der Ausrüstungen des lokalen Firmennetzes (RLE) und zum Filtern und Speichern der von den in den Ausrüstungen des Netzes arbeitenden Agenten ausgelösten Alarme umfassen:

- ein Modellkonfigurationsmodul (MCM), das Alarmfilterungsmodelle und Indikatoren, die in den Ausrüstungen des Unternetzes automatisch instanziiert werden können, enthält, wobei jeder Indikator einer Abfrageperiode zugeordnet ist, wobei ein Indikator eine Gleichung ist, in die Datenbasismanagement-Objektinstanzen eingegeben werden,
- ein Indikatorberechnungsmodul (MCI), das das Ergebnis der Anwendung eines Indikators auf eine Ausrüstung berechnet, wobei der Indikator für die Domäne definiert ist, zu der die Ausrüstung gehört, wobei das Ergebnis dieser Anwendung mit einem Schwellenwert verglichen wird, der während einer bestimmten Zeitdauer in einer bestimmten Anzahl nicht überschritten werden darf,
- ein Alarmfilterungsmodul (MFA), das die von den in den Ausrüstungen des Unternetzes arbeitenden Agenten geschickten Alarme empfängt und dann einen Teil der Alarme mit Hilfe eines für eine gegebene Domäne definierten Filters auswählt, wobei die ausgewählten Alarme wieder zum Haupt-Administrator (AD) zurückgesendet werden.

12. System nach Anspruch 9, **dadurch gekennzeichnet, dass** die Mittel zum Sichern der zum Haupt-Administrator (AD) geschickten Alarme gebildet sind aus:

- einem Wachhund-Modul (MCG), das so beschaffen ist, dass es dann, wenn es ein Modul dazu auffordert, die Existenz einer Ausrüstung durch wiederholtes Schicken von Aufrufen verifiziert, wobei das Wachhund-Modul so beschaffen ist, dass es dann, wenn die verschwundene Ausrüstung nicht auf eine im Voraus definierte Anzahl von Aufrufen geantwortet hat, einen Alarm zu dem Haupt-Administrator (AD) schickt, der von diesem Letzteren so wahrgenommen wird, als ob er von der verschwundenen Ausrüstung käme,
- einem Alarmsicherungsmodul (MSA), das gemäß dem Client-Server-Mechanismus arbeitet, wobei der Client (cMSA) dann, wenn zu dem Administrator wenigstens ein Alarm geschickt wird, eine Bestätigungsnachricht des bei dem Haupt-Administrator (AD) befindlichen Servers (sMSA) erwartet,

wobei der Server (sMSA) nach dem Empfang der Sendenachricht eine Empfangsbestätigungsnachricht zu dem Client (cMSA) schickt, wobei der Client wieder den Alarm und eine weitere Sendenachricht zu dem Administrator schickt, wenn nach einer bestimmten Zeit die Empfangsbestätigungsnachricht von dem Client nicht empfangen worden ist.

13. System nach Anspruch 11, **dadurch gekennzeichnet, dass** das Indikatorberechnungsmodul (MCI) dann, wenn der Schwellenwert in einer bestimmten Anzahl während einer bestimmten Zeitdauer überschritten worden ist, so beschaffen ist, dass es einen Alarm zu dem Haupt-Administrator (AD) aussendet, wobei der Alarm von dem Haupt-Administrator so wahrgenommen wird, als ob er von der Ausrüstung gesendet worden wäre, deren Instanziierung erfolgt ist.

14. System nach Anspruch 11, wobei die Instanzen durch eine Abfrage der Agenten, die in jeder der Ausrüstungen des Unternetzes arbeiten, erhalten werden.

15. System nach Anspruch 11, **dadurch gekennzeichnet, dass** das Ergebnis eines Indikators und/oder einer Liste geschickter Alarme in einer auf der Festplatte archivierten Datei gespeichert werden kann.

16. System nach Anspruch 11, **dadurch gekennzeichnet, dass** die Parametrierung der Alarmfilter entweder durch eine Initialisierungsdatei oder durch das snmp-Protokoll ausgeführt wird.

17. System nach Anspruch 9, **dadurch gekennzeichnet, dass** die zu schickenden Alarme durch das Alarmbestätigungsmodul akkumuliert werden, um sie gruppiert als Paket mit einer gegebenen Frequenz zu schicken.

18. System nach Anspruch 9, **dadurch gekennzeichnet, dass** ein Alarmfilterungsmodul eine wieder zu erkennende Beschreibung des Alarms und eine maximale Anzahl von Alarmauftritten, vor der ein anderer Alarm zu dem Haupt-Administrator (AD) ausgesendet wird, enthält, wobei die maximale Anzahl von Alarmauftritten während einer bestimmten Periode empfangen wird.

19. System nach Anspruch 10, **dadurch gekennzeichnet, dass** die verschiedenen Module so beschaffen sind, dass sie den Kern (N) abfragen, um ihre Betriebsparameter zu initialisieren.

20. System nach Anspruch 10, **dadurch gekennzeichnet, dass** der Kern (N) so beschaffen ist, dass er eine Datenbasis managt, die alle Instanzen der Informationsmanagementbasis enthält, wobei der Kern wenigstens zwei Kommunikationsträger und eine gemeinsame Schnittstelle für das Management der Kommunikation mit den Modulen enthält.

21. System nach Anspruch 19, **dadurch gekennzeichnet, dass** die Initialisierungsparameter des Entdeckungsmoduls (MD) die Periode, die zwei Entdeckungen trennt, die minimale Anzahl von zu entdeckenden Systemen und die Maske des Internet-Protokolls, die die Ausdehnung des zu entdeckenden Netzes bestimmt, umfassen.

22. System nach Anspruch 9, **dadurch gekennzeichnet, dass** eine entdeckte Ausrüstung (ET) in Abhängigkeit von ihren Antworten auf Abfragen, die an jeder Gesamtheit von Informationsmanagementbasis-Objektinstanzen, die eine Domäne definieren, ausgeführt werden, in eine oder in mehrere Domänen klassifiziert wird.

# FIG. 1

# FIG. 4

# FIG. 2

AD

ISM

cMSA

MCG

MD

MFA

N

MCM

sMSA

MCI

COACH

# FIG. 3

AD

COACH

Site 1    Site 2    Site i    Site n

**EP 0 951 155 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5651006 A
- JP 9101929 A